# EUROPÄISCHE PATENTSCHRIFT

(11) **EP 1 018 224 B1**
(45) Veröffentlichungstag und Bekanntmachung des Hinweises auf die Patenterteilung: **04.10.2001**
(21) Anmeldenummer: 98924000.7
(22) Anmeldetag: 13.03.1998
(51) Int. Cl.: H04B 1/38, H04M 1/72

(54) **AUTORADIO MIT EINEM HANDGERÄT**
CAR RADIO INCLUDING A HAND DEVICE
AUTORADIO COMPORTANT UN APPAREIL MANUEL

(30) Priorität: 23.09.1997 DE 19741854
(43) Veröffentlichungstag der Anmeldung: 12.07.2000
(73) Patentinhaber: ROBERT BOSCH GMBH, 70442 Stuttgart (DE)
(72) Erfinder: STROHMEIER, Wolfgang, D-31137 Hildesheim (DE)
(86) Internationale Anmeldenummer: DE9800740
(87) Internationale Veröffentlichungsnummer: WO9916180

(56) Entgegenhaltungen:
- EP-A- 0 472 361
- US-A- 5 537 673

## Beschreibung

Die Erfindung betrifft ein Autoradio mit einem in einer horizontal erstreckten Aufnahme einer Frontplatte eingesetzten Handgerät, das ein Display und beschriftete Bedientasten aufweist und als Bedienteil für das Autoradio oder als Telefongerät einsetzbar ist.

Durch DE 91 09 141 U1 ist ein Autoradio mit einem abnehmbaren Bedienteil bekannt, das zugleich als Telefonhandapparat ausgebildet ist. Die Abnehmbarkeit des Bedienteils war im wesent-lichen als Diebstahlsicherung vorgesehen, so daß die Ausbildung des abnehmbaren Bedienteils als Telefonhandapparat als Zusatznutzen gedacht war. Bei dieser Anordnung können Bedien- und Anzeigeelemente für beide Zwecke ausgenutzt werden. Das bekannt Konzept hat sich nicht durchgesetzt, weil zwischenzeitlich elektronische, in der Handhabung einfachere Mittel der Diebstahlsicherung verwendet werden. Die Handhabung des abnehmbaren Bedienteils als Telefonhandapparat entspricht darüber hinaus nicht der Handhabung der üblichen Telefonhandgeräte. In heutiger Technik wird daher eine körperliche Verbindung zwischen Autoradio und Telefon nicht mehr hergestellt, so daß das Telefon als eigenes Gerät an geeigneter Stelle im Automobil angebracht wird. Dabei ergibt sich allerdings das Problem, daß die Anbringung des Telefonhandgeräts in einer Halterung, die auch der Aufladung des Telefonhandgeräts dient, häufig eines Kompromisses zwischen Funktionalität und Design bedarf.

Zur Lösung dieses Problems wird erfindungsgemäß auf die eingangs erwähnte körperliche Verbindung von Autoradio und Telefonhandgerät zurückgegriffen und zur Vermeidung der dabei bestehenden Handhabungsnachteile erfindungsgemäß die Beschriftung der Bedientasten in einer Achse ausgerichtet, die aus der üblichen lotrechten Achsrichtung des Handgeräts im eingebauten Zustand in Richtung der Längsachsrichtung des Handgeräts um einen Winkel zwischen 30 und 60° gedreht ist, um die Beschriftung in beiden Gebrauchsstellungen des Handgeräts leicht ablesbar zu machen.

Die erfindungsgemäße Maßnahme ermöglicht eine bequeme Benutzung des Handgeräts sowohl in der eingesetzten Stellung als auch in der in der Hand gehaltenen Gebrauchsstellung, die im wesentlichen um 90° gedreht ist und in der die Längsachsrichtung im wesentlichen lotrecht verläuft. Die beiden Gebrauchsstellungen sind somit etwa um 90° zueinander gedreht. Die Beschriftung ist erfindungsgemäß so angeordnet, daß sich die Beschriftungsachse für die Bedientasten zwischen den beiden Gebrauchsstellungen befindet, und zwar in einem Bereich um die Mitte zwischen den beiden Gebrauchsstellungen herum, vorzugsweise genau in der Mitte. Auf diese Weise ist eine bequeme Ablesbarkeit in beiden Gebrauchsstellungen gegeben, wobei die in den Gebrauchsstellungen leicht gedrehte Beschriftungsrichtung lediglich als Designvariante empfunden wird. Gleiches gilt für längliche Tasten, die zur Unterscheidung von Funktionen von runden Bedientasten vorgesehen sind und senkrecht zur Achse der Beschriftung ausgerichtet sind.

In einer besonders bevorzugten Ausführungsform der Erfindung ist auch die Richtung der Anzeige auf dem Display zur Anpassung an die Gebrauchsstellung umschaltbar. Hierzu kann das Handgerät mit einem Lagesensor versehen sein, der die jeweilige Gebrauchsstellung detektiert und automatisch die Umschaltung bewirkt. Selbstverständlich ist auch eine manuelle Umschaltung möglich und geeignet.

Das erfindungsgemäße Handgerät eignet sich naturgemäß auch zur Fernbedienung des Autoradios, wenn es entsprechend mit einem Fernbedienungsgeber ausgestattet ist.

Die Erfindung soll im folgenden anhand eines in der Zeichnung dargestellten Ausführungsbeispiels näher erläutert werden. Es zeigen:
- Figur 1 -: eine Frontplatte eines Autoradios mit einem eingesetzten Handgerät im Autoradiobetrieb
- Figur 2 -: die Anordnung gemäß Figur 1 im Telefonbetrieb
- Figur 3 -: die Anordnung gemäß Figur 1 mit dem herausge nommenen Handgerät in der zum Telefonieren üb lichen Gebrauchsstellung und mit einem hierfür umgeschalteten Display
- Figur 4 -: die Anordnung gemäß Figur 3 mit einer Ansicht auf die Rückseite des Handgeräts.

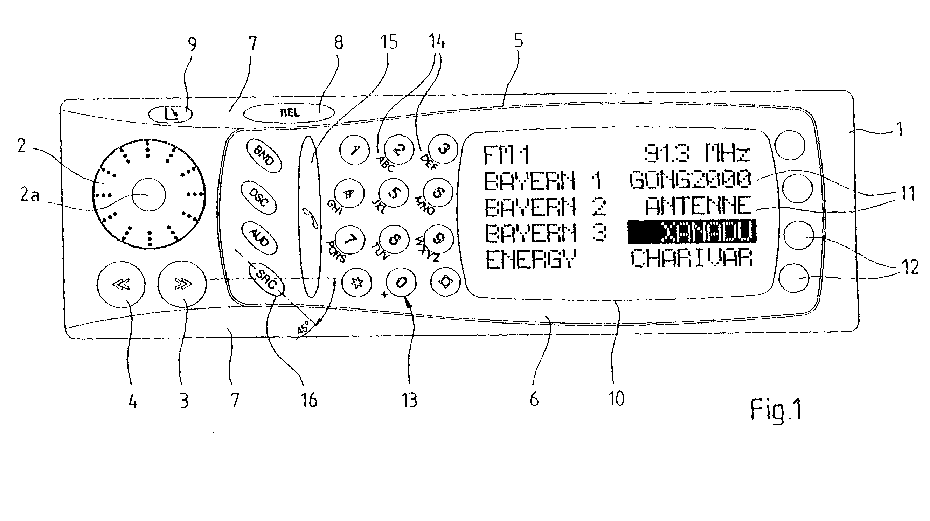

Figur 1 läßt eine Frontplatte 1 eines Autoradios erkennen, die in üblicher Weise nach Standardmaßen eine wesentlich größere Breite als Höhe aufweist. Auf einer Seite der Frontplatte 1 befindet sich ein Einstellrad 2, mit dem u.a. die Lautstärke des Autoradios regulierbar ist. Darunter befinden sich eine Vorlauftaste 3 und eine Rücklauftaste 4, mit denen - je nach eingeschalteter Audioquelle ein Sendersuchlauf, ein Bandvorlauf oder eine Skip-Funktion eines CD-Laufwerks steuerbar sind.

Die überwiegende Breite der Frontplatte 1 ist durch eine Ausnehmung 5 belegt, in die ein schnurlos herausnehmbares Handgerät 6 eingesetzt ist. Das Handgerät 6 und die Ausnehmung 5 weisen eine leichte nach außen gewölbte Kontur auf, die in einem zum Lautstärkeregler 2 erstreckenden Bereich in eine leichte Taillierung übergeht. Im Bereich der Taillierung ist die Frontplatte 1 oben und unten mit einer Abschrägung 7 versehen. In der oberen Abschrägung befindet sich eine längliche Taste 8 zum Entriegeln des Handgeräts 6 und eine kleinere Taste 9, mit der die Frontplatte 1 insgesamt motorisch nach unten verfahrbar ist, um einen Schacht für ein Magnetband-Kassettengerät und/oder einen CD-Spieler freizugeben.

Das Handgerät weist ein Display 10 auf, in dem - wie in Figur 1 dargestellt - alphanumerische Anzeigen in horizontalen Zeilen 11 darstellbar sind. Mit Hilfe des Einstellrads 2 können Cursor- bzw. Scroll-Aktionen im Display 10 gesteuert werden. Eine zentrale Taste 2a des Einstellrads 2 dient sowohl als ENTER-Taste als auch - per Zeitfenster gesteuert - als OFF-Taste.

Auf einer Seite des Displays befinden sich vier Tasten 12, die unbeschriftet sind und als Soft-Keys der Auswahl von beispielsweise auf dem Display 10 in vier Zeilen nahe der Tasten 12 wiedergegebenen, abgespeicherten Radiostationen dienen.

Auf der anderen Seite des Displays befindet sich eine übliche Zifferntastatur 13, die aus runden Tasten besteht, die mit den Ziffern "1" bis "0" beschriftet sind. Neben den Tasten der Zifferntastatur 13 befinden sich Buchstabenbeschriftungen 14, die die mit der zugehörigen Taste anwählbaren Buchstaben wiedergeben.

Die Buchstabentastatur 13 wird seitlich abgeschlossen durch eine Verbindungs-Aktivierungstaste 15, die sich über die Gesamthöhe der Zifferntastatur 13 erstreckt und in üblicher Weise zur Herstellung bzw. Unterbrechung einer Telefonverbindung dient.

Auf der der Zifferntastatur 13 gegenüberliegenden Seite der Verbindungs-Aktivierungstaste 15 befinden sich neben- bzw. untereinander angeordnet vier längliche Tasten 16, die zur Beeinflussung der jeweiligen Betriebsart dienen, wobei eine Taste "BND" zur Bandumschaltung während des Radiobetriebs, eine Taste "DSC" zur Auswahl individueller Grundeinstellungen und die Taste "AUD" zur Auswahl von klangbeeinflussenden Funktionen dienen. Eine vierte Taste "SRC" dient zur Umschaltung des Handgeräts 6 zwischen Autoradiobetrieb, CD- bzw. Kassettenbetrieb und Telefonbetrieb.

Die Tasten 16 sind längliche Tasten in Ovalform und unterscheiden sich somit von den runden Tasten der Zifferntastatur 13 und kennzeichnen somit eine andere Funktionsart. Die vier unmittelbar am Display 10 angeordneten Tasten der Zifferntastatur 13 haben in der Radiofunktion des Handgeräts 6 die gleiche Funktion wie die Tasten 12, fungieren also als Soft-Keys zur Durchführung einer Auswahlfunktion in Verbindung mit einer entsprechenden Anzeige auf dem Display 10.

Figur 1 zeigt das Handgerät 6 in der Autoradiofunktion, in der auf dem Display 10 beispielsweise Stationsnamen von abgespeicherten Funktionen wiedergegeben werden.

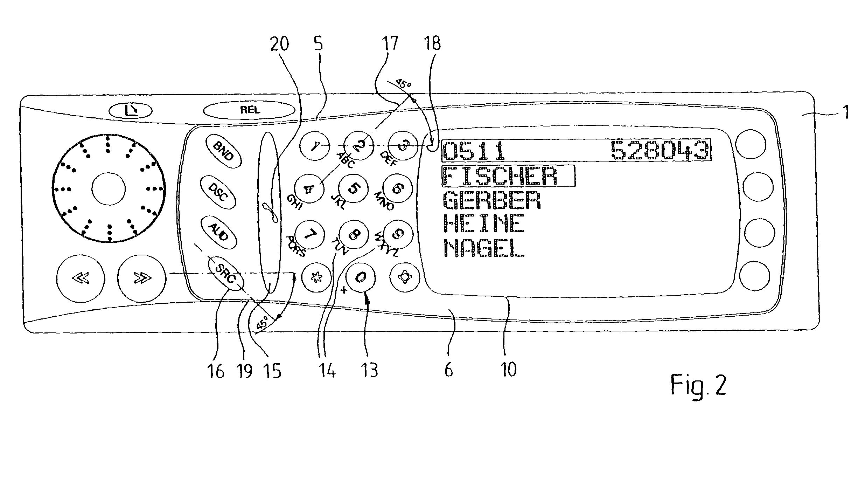

Nach Umschaltung in den Telefonbetrieb, der in Figur 2 dargestellt ist, erscheint im Display 10 beispielsweise die Anzeige von abgespeicherten Telefonnummern bzw. zugehörigen Namen.

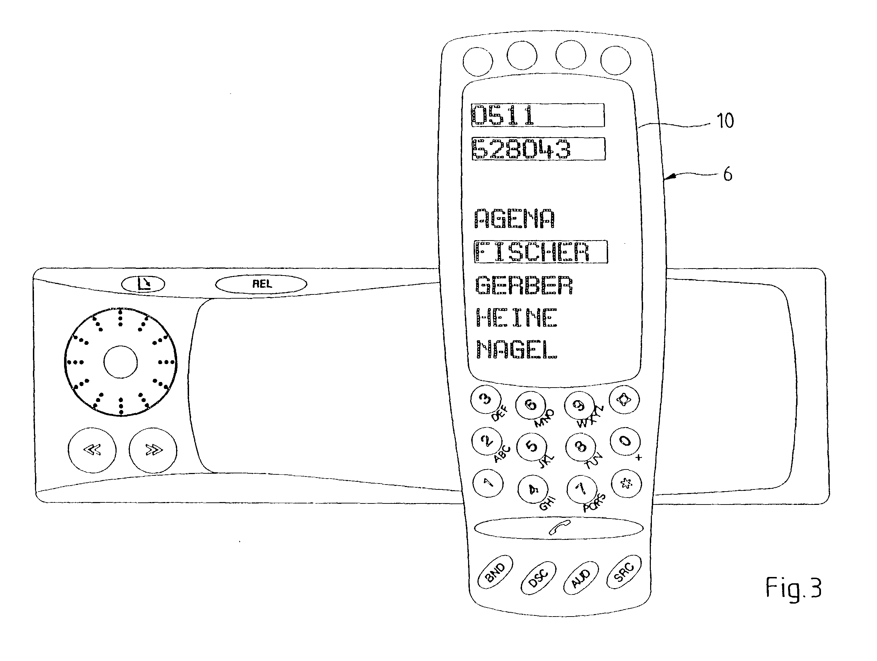

Figur 3 verdeutlicht die Handhabung des Handgeräts 6 im Telefonbetrieb nach der Herausnahme des Handgeräts 6 aus der Ausnehmung 5 der Frontplatte 1. Da das herausgenommene Handgerät üblicherweise in einer in Figur 3 dargestellten Position verwendet wird, in der sich die Längsachse des Handgeräts 6 etwa in lotrechter Lage befindet, ist das Display 10 umgeschaltet worden, um die im Telefonbetrieb vorgenommenen Anzeigen auf dem Display 10 nunmehr in senkrecht zur Längsachse stehenden Zeilen vorzunehmen.

Die Figuren 2 und 3 verdeutlichen, daß die Beschriftung der Tasten der Zifferntastatur 13 einschließlich der Buchstabenbeschriftung 14, der Verbindungssteuertaste 15 und der länglichen Tasten 16 in Richtung einer Mittelachse 17 vorgenommen ist, die um einen Winkel von beispielsweise 45° zur Längsachsenrichtung 18 des Handgeräts 6 gedreht ist. Auch die Buchstabenbeschriftungen 14 sind im wesentlichen symmetrisch zur Beschriftungsachse 17 auf einem Kreisabschnitt angeordnet. Die länglichen Tasten 16 sind mit ihrer Längsachse 19 senkrecht zur Richtung der Beschriftungsachse 17 ausgerichtet, so daß sich die Beschriftung über die größere Breite der länglichen Achsen 16 erstrecken kann und dennoch symmetrisch zur Beschriftungsachsenrichtung 17 ausgebildet ist. Auch ein üblicherweise auf der Verbindungssteuertaste 15 vorhandenes Telefonhörersymbol 20 ist symmetrisch zur Beschriftungsachsenrichtung 17 ausgebildet.

Diese Ausbildung der Beschriftungen hat zur Folge, daß sowohl in der in Figur 2 als auch in der in Figur 3 dargestellten Gebrauchsstellung des Handgeräts 6 die Beschriftungen jeweils nur um 45° aus der Lotrechten herausgedreht sind, wenn die Beschriftungsachse 17 mit der Längsachse 18 einen Winkel von 45° bildet.

In einer Variante kann es zweckmäßig sein, den in Figur 2 eingezeichneten Winkel zwischen den Achsen 17, 18 etwas größer, bis zu maximal 60°, auszubilden, um die Ablesbarkeit im horizontalen, eingebauten Zustand des Handgeräts 6 zu begünstigen. Dabei wird der Tatsache Rechnung getragen, daß das herausgenommene, in der Hand gehaltene Handgerät 6 im Gebrauch nicht immer völlig lotrecht getragen wird, sondern eine gewisse Schrägstellung zur Erleichterung der Ablesbarkeit tolerierbar ist und vom Benutzer instinktiv vorgenommen wird.

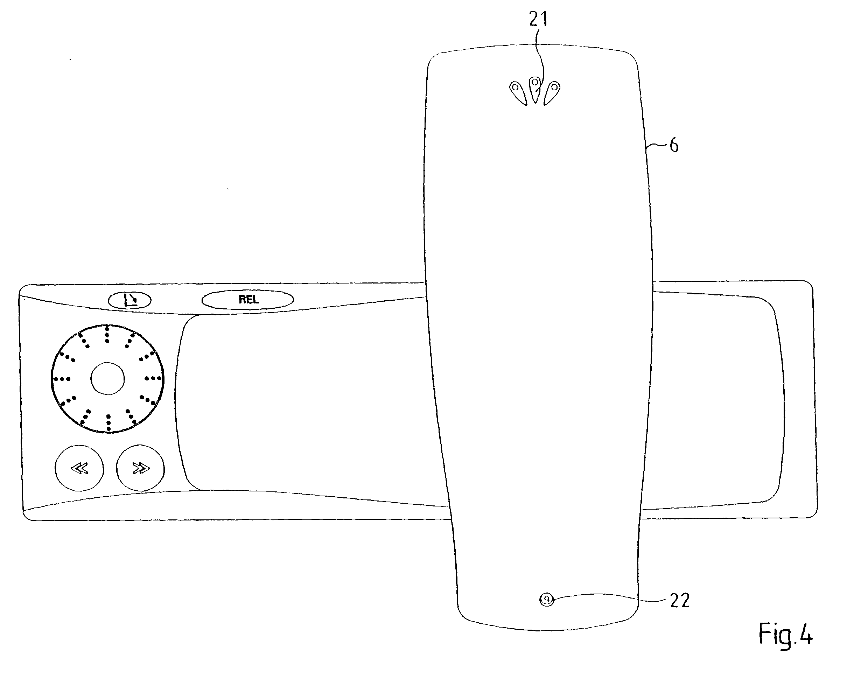

Figur 4 verdeutlicht die Ausbildung der Rückseite des Handgeräts 6 mit mehreren länglichen Schallöffnungen 21 für einen Lautsprecher und einer kleineren Schallöffnung 22 am gegenüberliegenden Ende des Handgeräts 6 für ein Sprechmikrofon.

Die zeichnerischen Darstellungen lassen erkennen, daß trotz der Doppelfunktion des Handgeräts 6 eine in beiden Gebrauchsstellungen (Figuren 1 bzw. 2 und 3) gute Handhabbarkeit und Ablesbarkeit gewährleistet ist, die denen eines üblichen Telefonhandgerät nicht nachstehen. Außerdem bietet das erfindungsgemäße Handgerät 6 in beiden Gebrauchsstellungen ein ansprechendes Design.

## Patentansprüche

1. Autoradio mit einem in einer horizontal ersteckten Aufnahme (5) einer Frontplatte (1) eingesetzten Handgerät (6), das ein Display (10) und beschriftete Bedientasten (13, 15, 16) aufweist und als Bedienteil für das Autoradio oder als Telefongerät einsetzbar ist, **dadurch gekennzeichnet, daß** die Beschriftung der Bedientasten (13, 15, 16) in einer Achse (17) ausgerichtet ist, die aus der üblichen lotrechten Achsrichtung des Handgeräts (6) im eingebauten Zustand in Richtung der Längsachsrichtung (18) des Handgeräts (6) um einen Winkel zwischen 30° und 60° gedreht ist, um die Beschriftung in beiden Gebrauchsstellungen des Handgeräts (6) leicht ablesbar zu machen.

2. Autoradio nach Anspruch 1, **dadurch gekennzeichnet, daß** die Achse (17) der Beschriftung um 45° gegenüber der Längsachsrichtung (18) des Handgeräts (6) gedreht ist.

3. Autoradio nach Anspruch 1 oder 2, **dadurch gekennzeichnet, daß** beschriftete längliche Tasten (16) senkrecht zur Achse (17) der Beschriftung ausgerichtet sind.

4. Autoradio nach einem der Ansprüche 1 bis 3, **dadurch gekennzeichnet, daß** die Richtung der Anzeige auf dem Display (10) zur Anpassung an die Gebrauchsstellung umschaltbar ist.

5. Autoradio nach Anspruch 4, **dadurch gekennzeichnet, daß** zur Umschaltung der Anzeige des Displays (10) ein Lagesensor des Handgeräts (6) vorgesehen ist.

6. Autoradio nach einem der Ansprüche 1 bis 5, **dadurch gekennzeichnet, daß** das Handgerät (6) als Fernbedienungsgerät für das Autoradio ausgebildet ist.

## Claims

1. Car radio having a handheld unit (6) which is inserted into a horizontally extending holder (5) in a front panel (1), has a display (10) and inscribed operating keys (13, 15, 16) and can be used as a control section for the car radio or as a telephone, **characterized in that** the inscription on the operating keys (13, 15, 16) is aligned on an axis (17) which is rotated through an angle of between 30° and 60° from the normal vertical alignment of the handheld unit (6) in the installed state in the direction of the longitudinal axis direction (18) of the handheld unit (6), in order to make it easy to read the inscription when the handheld unit (6) is in both of the in-use positions.

2. Car radio according to Claim 1, **characterized in that** the axis (17) of the inscription is rotated through 45° with respect to the longitudinal axis direction (18) of the handheld unit (6).

3. Car radio according to Claim 1 or 2, **characterized in that** inscribed elongated keys (16) are aligned at right angles to the axis (17) of the inscription.

4. Car radio according to one of Claims 1 to 3, **characterized in that** the direction of the indication on the display (10) can be switched for matching to the in-use position.

5. Car radio according to Claim 4, **characterized in that** the handheld unit (6) has an orientation sensor in order to switch the indication on the display (10).

6. Car radio according to one of Claims 1 to 5, **characterized in that** the handheld unit (6) is in the form of a remote control for the car radio.

## Revendications

1. Autoradio comportant avec un appareil portable (6), incorporé dans un logement (5) horizontal d'une plaque avant (1), l'appareil comportant un écran (10) et des touches de commande (13, 15, 16), et pouvant également être utilisé comme organe de commande d'un autoradio ou d'un poste téléphonique,
**caractérisé en ce que**
le marquage des touches de commande (13, 15, 16) est disposé sur un axe (17) incliné à partir de l'orientation habituellement verticale de l'appareil portable (6) en position encastrée, d'un angle de 30 à 60° en direction de l'axe longitudinal (18) de l'appareil (6), pour rendre facilement lisible ce marquage dans les deux positions d'utilisation de l'appareil (6).

2. Autoradio selon la revendication 1,
**caractérisé en ce que**
l'axe (17) du marquage est incliné de 45° par rapport à l'axe longitudinal (18) de l'appareil portable (6).

3. Autoradio selon la revendication 1 ou 2,
**caractérisé en ce que**
les touches oblongues avec inscription (16) sont disposées perpendiculairement à l'axe de marquage (17).

4. Autoradio selon l'une quelconque des revendications 1 à 3,
**caractérisé en ce que**
la direction des inscriptions figurant sur l'écran (10) est commutable pour s'adapter à la position d'utilisation.

5. Autoradio selon la revendication 4,
**caractérisé en ce que** pour la commutation des inscriptions sur l'écran (10), il est prévu un détecteur de position de l'appareil (6).

6. Autoradio d'après l'une quelconque des revendications 1 à 5,
**caractérisé en ce que**
l'appareil portable (6) peut être utilisé comme appareil à télécommande pour l'autoradio.
